Europäisches Patentamt

European Patent Office

Office européen des brevets

(11) Veröffentlichungsnummer: **0 221 267**
**B1**

(12) **EUROPÄISCHE PATENTSCHRIFT**

(45) Veröffentlichungstag der Patentschrift:
**12.09.90**

(21) Anmeldenummer: **86111613.5**

(22) Anmeldetag: **22.08.86**

(51) Int. Cl.⁵: **F02M 35/04, F02M 69/00**

(54) **Anordnung mit einem Luftmassenmesser für eine Brennkraftmaschine.**

(30) Priorität: **02.11.85 DE 3539015**

(43) Veröffentlichungstag der Anmeldung:
**13.05.87 Patentblatt 87/20**

(45) Bekanntmachung des Hinweises auf die Patenterteilung:
**12.09.90 Patentblatt 90/37**

(84) Benannte Vertragsstaaten:
**DE FR GB SE**

(56) Entgegenhaltungen:
**EP-A- 0 095 516
EP-A- 0 096 842
DE-A- 3 338 653
GB-A- 2 122 254**

(73) Patentinhaber: **VDO Adolf Schindling AG,
Gräfstrasse 103, D-6000 Frankfurt/Main 90(DE)**

(72) Erfinder: **Porth, Wolfgang, Röhrborngasse 70,
D-6000 Frankfurt am Main 60(DE)**
Erfinder: **Weibler, Wolfgang, Dr., Vorderheide 14,
D-6238 Hofheim(DE)**
Erfinder: **Kern, Eckhart, Hofheimer Strasse 35,
D-6238 Hofheim 7(DE)**
Erfinder: **Hannewald, Thomas, Feldmannstrasse 6,
D-6103 Griesheim(DE)**
Erfinder: **Weingärtner, Reiner,
Wilhelm-Leuschner-Strasse 9, D-6238 Hofheim a. T.(DE)**

(74) Vertreter: **Klein, Thomas, Dipl.-Ing. (FH), Sodener
Strasse 9 Postfach 6140, D-6231 Schwalbach a. Ts.(DE)**

ACTORUM AG

## Beschreibung

Die Erfindung betrifft eine Anordnung mit einem Luftmassenmesser für eine Brennkraftmaschine, wobei die Meßstelle des Luftmassenmessers in einem Meßrohr angeordnet ist.

Bei der Regelung von Brennkraftmaschinen mit Kraftstoffeinspritzung ist die Messung der vom Motor angesaugten Luftmasse erforderlich. Hierzu sind mechanische Systeme bekannt, welche beispielsweise mit in den Luftstrom hineinragenden beweglichen Klappen oder Stauscheiben arbeiten. Außerdem sind zur Luftmassenmessung Sensoren bekannt geworden, zum Beispiel Hitzedraht-Luftmassenmesser. Diese haben den Vorteil, daß sie keine bewegten Teile aufweisen und gegenüber den mechanischen Systemen einen geringen Eingriff in die Luftströmung zur Folge haben. Außerdem ist das Meßergebnis unabhängig von Höhenunterschieden, was bei den mechanischen Systemen, welche primär die Luftmenge messen, nicht der Fall ist.

Bei der Anordnung der Luftmassen- bzw. Luftmengenmesser wurden verschiedene Wege beschritten. So ist es beispielsweise bekannt geworden, einen mit Ultraschall arbeitenden Luftmassenmesser mit einem Luftfilter konstruktiv zu verbinden. Dabei ist die Meßstelle des Luftmassenmessers innerhalb eines zum Luftfilter konzentrisch angeordneten kurzen Meßrohres vorgesehen. Wegen der geringen Länge des Meßrohres bilden sich jedoch nur in Grenzen geeignete Strömungsverhältnisse an der Meßstelle aus, die bei den unterschiedlichen Betriebsbedingungen und gleichem Massenstrom weitgehend gleich sind, so daß die Genauigkeit des Meßergebnisses nicht allen Anforderungen genügt.

Eine Anordnung der eingangs genannten Art ist aus der EP-A 0 096 842 bekannt. Bei dieser Anordnung wird Luft aus dem Bereich eines Luftfilters über einen etwa kreisförmigen Zufuhrkanal einem Meßrohr zugeführt, in dem die Meßstelle angeordnet ist. Sowohl kurz vor der Meßstelle an der Verbindung zwischen Meßrohr und Zufuhrkanal als auch direkt hinter der Meßstelle ist das Meßrohr rechtwinklig abgeknickt, so daß an diesen Stellen starke Verwirbelungen des Luftstroms erfolgen. Damit wird die Luftmassenmessung erheblich beeinträchtigt.

Weiterhin sind aus der EP-A 0 095 516 und der GB-A 21 22 254 Anordnungen der eingangs genannten Art bekannt, bei denen die Meßstellen in kurzen, geraden Rohrstücken angeordnet sind. Durch die kürze der Rohrstücke ist nur in beschränktem Maß eine Vergleichsmäßigung des Luftstroms und damit keine genaue Luftmassenmessung möglich.

Aufgabe der vorliegenden Erfindung ist es daher, eine Anordnung mit einem Luftmassenmesser anzugeben, bei welchem innerhalb des Meßrohres geeignete Strömungsverhältnisse gewährleistet sind und somit genauere Meßergebnisse erzielt werden. Dabei soll die Anordnung mit dem Luftmassenmesser preiswert herzustellen sein, zuverlässig arbeiten und sich bezüglich des Platzbedarfs sowie der Wartungsfreundlichkeit für den Anbau an eine Brennkraftmaschine, insbesondere eines Kraftfahrzeuges, eignen.

Diese Aufgabe wird erfindungsgemäß dadurch gelöst, daß das Meßrohr als im wesentlichen kreisförmiger, eine gleichmäßige Strömung im Bereich der Meßstelle erzeugender Strömungskanal ausgebildet ist und einen mit einer Ansaugöffnung der Brennkraftmaschine verbundenen Hohlraum umschließt, welcher an den Innenraum eines Luftfilters angrenzt und daß der Hohlraum und der Innenraum durch eine Trennwand voneinander getrennt sind.

Ähnliche Anordnungen sind in den prioritätsgleichen Anordnungen EP-A 0 221 268 und EP-A-0 222 987 enthalten.

Durch die erfindungsgemäße Anordnung werden ein ausreichend langer Strömungskanal und damit geeignete Strömungsverhältnisse an der Meßstelle gewährleistet. Die erfindungsgemäße Anordnung ist dabei von einer kompakten, wenig Platz beanspruchenden Bauform.

Eine Weiterbildung der Erfindung besteht darin, daß in der Trennwand eine die Eintrittsöffnung des Strömungskanals bildende Öffnung, deren Fläche größer als die Querschnittsfläche des Strömungskanals ist, vorgesehen ist.

Eine Ausgestaltung dieser Weiterbildung sieht vor, daß im Bereich der Eintrittsöffnung der Strömungskanal in einer Ebene verläuft, welche die Trennwand unter einem spitzen Winkel schneidet. Damit werden bereits beim Eintritt der Luft in den Strömungskanal Voraussetzungen für geeignete Strömungsverhältnisse an der Meßstelle geschaffen.

Andere Weiterbildungen bestehen darin, daß der Strömungskanal einen rechteckigen oder einen runden Querschnitt aufweist und daß der Strömungskanal durch entsprechende Formgebung eines den Hohlraum umgebenden und die Trennwand bildenden Gehäuses hergestellt ist.

Eine besonders kompakte Konstruktion wird dadurch erreicht, daß in dem Hohlraum ein Kraftstoffeinspritzventil angeordnet ist, dessen Düse einem zur Brennkraftmaschine führenden, eine Drosselklappe enthaltenden Rohr gegenüber steht.

Um zu vermeiden, daß Teile des eingespritzten Kraftstoffnebels nicht direkt in den Ansaugkanal des Motors, sondern zunächst in den Hohlraum gelangen, kann gemäß einer anderen Weiterbildung das zur Brennkraftmaschine führende Rohr trichterförmig in den Hohlraum hineinragen.

Zur besseren Leitung der Luft innerhalb des Hohlraums können im Bereich der Düse Leitelemente angeordnet sein.

Eine vorteilhafte Ausgestaltung der erfindungsgemäßen Anordnung besteht ferner darin, daß der Hohlraum von einem Gehäuse umschlossen ist, auf welches die Trennwand und das Luftfilter aufsetzbar sind.

Um bewährte und platzsparende Luftfilter anwenden zu können, können gemäß einer anderen Ausgestaltung der Erfindung der Innenraum des Luftfilters und der Hohlraum jeweils die Form eines flachen Zylinders aufweisen.

Andere Weiterbildungen der Erfindung sehen eine strömungstechnisch günstige Gestaltung des Strömungskanals vor, nämlich derart, daß die Fläche der Eintrittsöffnung größer als die Querschnittsfläche des Strömungskanals ist, daß im Bereich der Eintrittsöffnung der Strömungskanal in einer Ebene verläuft, welche die Trennwand unter einem spitzen Winkel schneidet und/oder daß der Strömungskanal in der Nähe der Eintrittsöffnung einen Strömungsgleichrichter und/oder in der Nähe der Austrittsöffnung ein Schutzgitter enthält. Auch kann der Durchmesser des Strömungskanals zur Verbesserung der Strömung in der Nähe des Sensors an der Meßstelle kleiner als an der Eintrittsöffnung sein.

Wenn die Erfindung auch in erster Linie auf die Verwendung von thermischen Sensoren, beispielsweise Hitzdraht-Sensoren, gerichtet ist, so ist eine vorteilhafte Anwendung anderer Sensoren, beispielsweise Ultraschall-Sensoren, durchaus möglich.

Zum Betrieb der in Frage kommenden Sensoren sind elektrische Schaltungen erforderlich, welche zweckmäßigerweise in der Nähe des Sensors angeordnet sind. Gemäß Weiterbildungen der Erfindung ist die dem Sensor zugeordnete elektrische Schaltung in der Nähe des Sensors auf der Trennwand angeordnet. Die erforderliche Kühlung der elektrischen Schaltung kann entweder durch die gefilterte Ansaugluft erfolgen oder dadurch, daß die Trennwand als Kühlkörper dient, wenn gemäß einer weiteren Ausgestaltung der Erfindung die elektrische Schaltung mit der Trennwand in wärmeleitender Verbindung steht.

Schließlich ist es möglich, weitere elektrische Schaltungen, beispielsweise eine die Signale des Luftmassenmessers und möglicherweise anderer Sensoren auswertende Regelschaltung im Innenraum des Luftfilters auf der Trennwand anzuordnen. Hierbei entsteht neben dem Vorteil der Kühlung auch ein weiterer Vorteil, daß nämlich verschiedene Elemente, welche zu einem Regelsystem gehören und somit funktionell zusammenhängen, auch körperlich innerhalb einer Baueinheit angeordnet sind.

Die Erfindung läßt zahlreiche Ausführungsformen zu. Zwei davon sind schematisch in der Zeichnung an Hand mehrerer Figuren dargestellt und nachfolgend beschrieben. Es zeigt:

Fig. 1 einen Querschnitt,
Fig. 2 einen Längsschnitt durch das erste Ausführungsbeispiel und
Fig. 3 einen Querschnitt durch das zweite Ausführungsbeispiel.

Gleiche Teile sind in den Figuren mit gleichen Bezugszeichen versehen.

Das Luftfilter 1 mit einem Gehäuse 2 ist ein an sich bekanntes die Form eines flachen Zylinders aufweisendes Luftfilter, wie es für die weitaus meisten Vergasermotoren verwendet wird. Anstelle eines Rohranschlusses für den Ansaugstutzen ist es jedoch unten offen. Es wird jedoch von einer Trennwand 7, welche den Filterinnenraum 4 von dem darunter liegenden, im folgenden näher beschriebenen Hohlraum trennt, verschlossen. Mit 3 ist in der Figur das eigentliche, lediglich schematisch dargestellte ringförmige Luftfilter bezeichnet.

Das Gehäuse 5, welches das Luftfilter 1 und die Trennwand 7 trägt, ist mit einem Rohr 10 verbunden, welches den Ansaugkanal der nicht dargestellten Brennkraftmaschine bildet. In dem Rohr 10 ist die Drosselklappe 11 angeordnet. Ein oberhalb der Eintrittsöffnung des Rohres 10 angeordnetes Einspritzventil 8 spritzt den Kraftstoff in die Luft, welche unmittelbar in das Rohr 10 eintritt. Damit ein Teil der von der Düse 9 versprühten Kraftstoffteilchen nicht in Bereiche der Luft gelangen, welche nicht direkt in das Rohr 10 strömt, kann eine trichterförmige Erweiterung 12 des Rohres 10 vorgesehen sein. Leitelemente 13 tragen dazu bei, die Strömung im Raum vor der Düse 9 zu beruhigen.

Der Übersichtlichkeit halber ist eine Halterung des Einspritzventils innerhalb des Gehäuses 5 nicht dargestellt. Der Entwurf einer solchen Halterung liegt jedoch im Bereich des Fachmännischen.

Das Einspritzventil 8 kann mit einem Systemdruckregler 21, welcher als solcher bekannt ist, zu einer konstruktiven Einheit zusammengefaßt sein. Leitungen für die Kraftstoffzu- und Rückführung sind vorgesehen, jedoch nicht dargestellt.

Der Hohlraum 6 des Gehäuses 5 bildet einen Pulsations-Dämpfungsraum. Bekanntlich erfolgt das Ansaugen bei mit Kolben arbeitenden Brennkraftmaschinen pulsierend. Diese Pulsation macht sich im gesamten Ansaugsystem bemerkbar. Für eine exakte Messung der Luftmassen ist jedoch eine gleichmäßige Strömung im Luftmassenmesser erforderlich; die Pulsation verfälscht somit das Meßergebnis.

Die Trennwand 7 weist eine Öffnung 17 auf, welche die Eintrittsöffnung des Strömungskanals 14 bildet. Im Bereich der Eintrittsöffnung 17 verläuft der Strömungskanal 14 in einem spitzen Winkel zur Ebene der Trennwand 7, so daß die Eintrittsöffnung 17 groß gegenüber dem Querschnitt des Strömungskanals 14 ist.

In der Nähe der Austrittsöffnung 19 ist ein Schutzgitter 20 vorgesehen, während an der Eintrittsöffnung 17 ein Strömungsgleichrichter 18 angeordnet ist, welcher in an sich bekannter Weise aus einer Vielzahl von in einen geeigneten Werkstoff eingebrachten Kanälen besteht.

Der Strömungskanal 14 kann im Bereich des Sensors 15 eine kleinere Querschnittsfläche als im übrigen Bereich aufweisen, wobei die Übergänge allmählich erfolgen. Um Ablagerungen von Verunreinigungen auf dem Sensor 15 zu vermeiden, kann in an sich bekannter Weise vor dem Sensor 15 ein zum Sensor 15 paralleler stabförmiger Körper angeordnet sein.

Wie bereits oben erwähnt, können bei der erfindungsgemäßen Anordnung verschiedenartige Sensoren verwendet werden. Eine bevorzugte Ausführung des Sensors 14 besteht in einem thermischen Sensor, bei welchem ein im Strömungskanal gespannter Draht oder ein auf einem Isolierstoffplättchen aufgebrachte Leiter von einem Strom durchflossen wird, so daß sie sich deutlich über die Temperatur der vorbeiströmenden Luft hinaus erwärmen. Über den temperaturabhängigen Widerstand kann in einer elektrischen Schaltung 16 die Temperatur des Leiters auf einen konstanten Wert geregelt werden, wobei je nach vorbeiströmender Luftmasse ein höherer oder niedrigerer Strom durch den Leiter fließt. Zur Kompensation des Einflusses der Lufttemperatur kann in der Nähe des elektrisch beheizten Meßleiters ein Vergleichsleiter angeordnet sein, welcher nur von einem geringen Strom durchflossen ist, so daß seine Temperatur praktisch der Temperatur der Luft entspricht.

Wegen der elektrischen Verbindungen des Sensors 15 mit der zugehörigen elektrischen Schaltung 16 ist diese in unmittelbarer Nähe des Sensors 15 angeordnet. Dabei hat es sich als besonders günstig herausgestellt, die elektrische Schaltung 16 im Innenraum des Luftfilters vorzusehen und an der Trennwand 7 zu befestigen. Dabei dient die durch das Filter 3 angesaugte Luft der Kühlung der elektrischen Schaltung 16, wobei bei gutem Wärmekontakt zwischen der Schaltung 16 und der Trennwand 7 die wirksame Kühlfläche, welche in der Lage ist, Wärme an die Luft abzugeben, erheblich vergrössert wird.

Außer der elektrischen Schaltung 16 kann im Innenraum 4 des Luftfilter 1 eine weitere mit der Schaltung 16 in Verbindung stehende Schaltung 22 angeordnet sein. Die Schaltung 22 enthält die an sich bekannte zur elektronischen Einspritzregelung erforderlichen Schaltungen. Durch die Anordnung der weiteren Schaltung 22 in diesem Bereich auf der Trennwand 7 wird neben einer guten Kühlung auch erreicht, daß sich die Leitungsführung zwischen der Schaltung 16 und der Schaltung 22 sowie dem Einspritzventil 8 erheblich vereinfacht. Ferner ist es für Wartungsarbeiten günstig, daß die genannten drei Komponenten des Einspritzregelsystems innerhalb einer Baugruppe angeordnet sind.

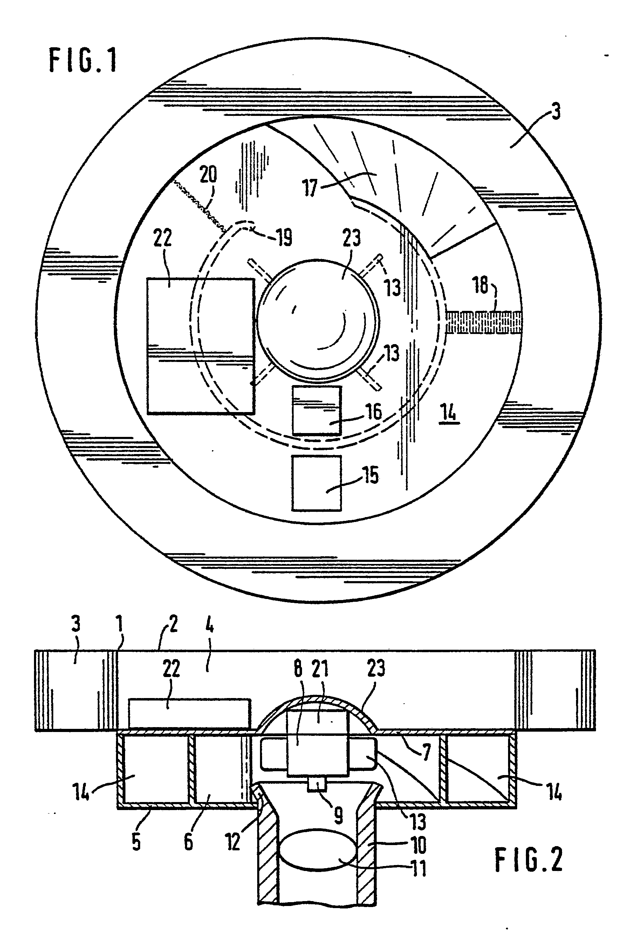

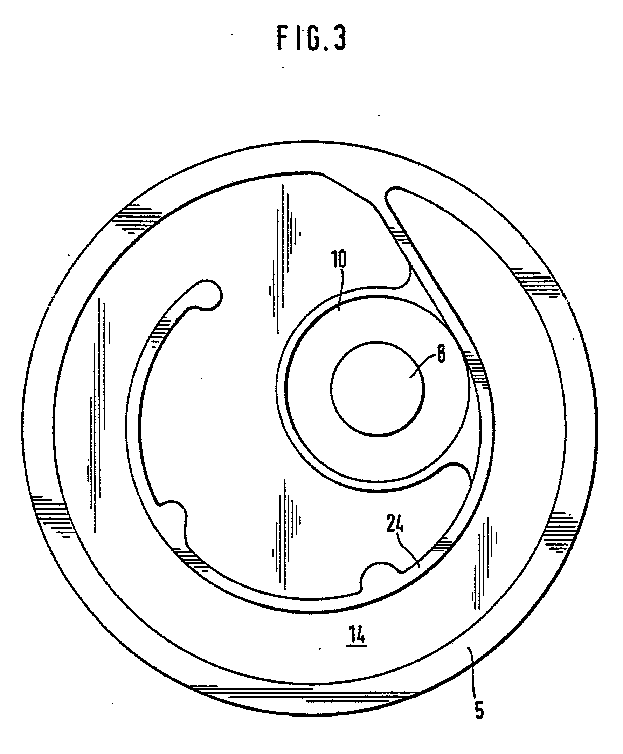

Während bei dem in den Figuren 1 und 2 gezeigten Ausführungsbeispiel das Rohr 10 und das Einspritzventil 8 gleichachsig mit dem Gehäuse 5 angeordnet sind, ist bei dem Ausführungsbeispiel nach Fig. 3 eine asymmetrische Anordnung des Einspritzventils 8 und des Rohres 10 vorgesehen. Im Gegensatz zu Fig. 1 stellt Fig. 3 eine Draufsicht auf das Gehäuse 5 bei entfernter Trennwand 7 dar. An mehreren Stellen der inneren Begrenzungswand 24 des Strömungskanals 14 sind Verdickungen vorgesehen zur Aufnahme von Bohrungen für die Befestigung der Trennwand. Im übrigen ist die in Fig. 3 dargestellte Anordnung derart gestaltet, daß das Gehäuse 5 zusammen mit dem Strömungskanal einstückig durch Spritzguß hergestellt werden kann.

**Patentansprüche**

1. Anordnung mit einem Luftmassenmesser für eine Brennkraftmaschine, wobei die Meßstelle des Luftmassenmessers in einem Meßrohr angeordnet ist, dadurch gekennzeichnet, daß das Meßrohr als im wesentlichen kreisförmiger, eine gleichmäßige Strömung im Bereich der Meßstelle erzeugenden Strömungskanal (14) ausgebildet ist und einen mit einer Ansaugöffnung der Brennkraftmaschine verbundenen Hohlraum (6) umschließt, welcher an den Innenraum (4) eines Luftfilters (1) angrenzt, und daß der Hohlraum (6) und der Innenraum (4) durch eine Trennwand (7) voneinander getrennt sind.

2. Anordnung nach Anspruch 1, dadurch gekennzeichnet, daß in der Trennwand (7) eine die Eintrittsöffnung (17) des Strömungskanals (14) bildende Öffnung, deren Fläche größer als die Querschnittsfläche des Strömungskanals (14) ist, vorgesehen ist.

3. Anordnung nach Anspruch 2, dadurch gekennzeichnet, daß im Bereich der Eintrittsöffnung (17) der Strömungskanal (14) in einer Ebene verläuft, welche die Trennwand (7) unter einem spitzen Winkel schneidet.

4. Anordnung nach Anspruch 1, dadurch gekennzeichnet, daß der Strömungskanal (14) einen rechteckigen Querschnitt aufweist.

5. Anordnung nach Anspruch 1, dadurch gekennzeichnet, daß der Strömungskanal (14) einen runden Querschnitt aufweist.

6. Anordnung nach Anspruch 1, dadurch gekennzeichnet, daß der Strömungskanal (14) durch entsprechende Formgebung eines den Hohlraum (6) umgebenden und die Trennwand (7) bildenden Gehäuses (5, 7) hergestellt ist.

7. Anordnung nach Anspruch 1, dadurch gekennzeichnet, daß in dem Hohlraum (6) ein Kraftstoffeinspritzventil (8) angeordnet ist, dessen Düse (9) einem zur Brennkraftmaschine führenden, eine Drosselklappe (11) enthaltendem Rohr (10) gegenübersteht.

8. Anordnung nach Anspruch 7, dadurch gekennzeichnet, daß das Rohr (10) trichterförmig in den Hohlraum (6) hineinragt.

9. Anordnung nach Anspruch 8, dadurch gekennzeichnet, daß die Trennwand (7) im Bereich des Kraftstoffeinspritzventils (8) eine in den Innenraum des Luftfilters hineinragende Ausbuchtung (23) aufweist.

10. Anordnung nach Anspruch 7, dadurch gekennzeichnet, daß im Bereich der Düse (9) Leitelemente (13) angeordnet sind.

11. Anordnung nach Anspruch 1, dadurch gekennzeichnet, daß der Hohlraum (6) von einem Gehäuse (5) umschlossen ist, auf welches die Trennwand (7) und das Luftfilter (1) aufsetzbar sind.

12. Anordnung nach Anspruch 1, dadurch gekennzeichnet, daß der Innenraum (4) des Luftfilters (1) und der Hohlraum (6) jeweils die Form eines flachen Zylinders aufweisen.

13. Anordnung nach Anspruch 12, dadurch gekennzeichnet, daß das Kraftstoffeinspritzventil (8) und das Rohr (10) asymmetrisch angeordnet sind.

14. Anordnung nach Anspruch 1, dadurch gekennzeichnet, daß der Strömungskanal (14) in der Nähe der Eintrittsöffnung (17) einen Strömungsgleichrichter (18) enthält.

15. Anordnung nach Anspruch 1, dadurch gekennzeichnet, daß der Strömungskanal (14) in der Nähe der Austrittsöffnung (19) ein Schutzgitter (20) enthält.

16. Anordnung nach Anspruch 1, dadurch gekennzeichnet, daß der Strömungskanal (14) als Venturi-Düse ausgebildet ist, in derem engsten Querschnitt die Meßstelle (15) vorgesehen ist.

17. Anordnung nach Anspruch 1, dadurch ge-

kennzeichnet, daß an der Meßstelle ein thermischer Sensor (15) angeordnet ist.

18. Anordnung nach Anspruch 17, <u>dadurch gekennzeichnet</u>, daß eine dem Sensor (15) zugeordnete elektrische Schaltung (16) in der Nähe der Meßstelle (14) auf der Trennwand (7) angeordnet ist.

19. Anordnung nach Anspruch 18, <u>dadurch gekennzeichnet</u>, daß die elektrische Schaltung (16) mit der Trennwand (7) in wärmeleitender Verbindung steht.

20. Anordnung nach Anspruch 18, <u>dadurch gekennzeichnet</u>, daß auf der Trennwand (7) weitere elektrische Schaltungen (22) angeordnet sind.

## Claims

1. Arrangement having an air mass meter for an internal combustion engine, the measuring zone of the air mass meter being situated in a measuring tube, characterised in that the measuring tube is constructed as a substantially circular flow duct (14) producing a uniform flow in the region of the measuring zone, and surrounds a chamber (6) which is connected to a suction inlet aperture of the internal combustion engine and which adjoins the interior space (4) of an air filter (1), and that the chamber (6) and the interior space (4) are separated from one another by a partition wall (7).

2. Arrangement according to claim 1, characterised in that there is provided in the partition wall (7) an aperture which forms the inlet aperture (17) of the flow duct (14) and the surface area of which is larger than the cross-sectional area of the flow duct (14).

3. Arrangement according to claim 2, characterised in that in the region of the inlet aperture (17) the flow duct (14) extends in a plane which intersects the partition wall (7) at an acute angle.

4. Arrangement according to claim 1, characterised in that the flow duct (14) has a rectangular cross-section.

5. Arrangement according to claim 1, characterised in that the flow duct (14) has a round cross-section.

6. Arrangement according to claim 1, characterised in that the flow duct (14) is produced by suitable shaping of a housing (5, 7) which surrounds the chamber (6) and which provides the partition wall (7).

7. Arrangement according to claim 1, characterised in that a fuel injection valve (8) is arranged in the chamber (6), with its nozzle (9) situated opposite a tube (10) which leads to the internal combustion engine and which contains a pivotable throttle valve (11).

8. Arrangement according to claim 7, characterised in that the tube (10) projects in funnel shape into the chamber (6).

9. Arrangement according to claim 8, characterised in that the partition wall (7) has, in the region of the fuel injection valve (8), a convexity (23) which projects into the interior space of the air filter.

10. Arrangement according to claim 7, characterised in that guide elements (13) are arranged in the region of the nozzle (9).

11. Arrangement according to claim 1, characterised in that the chamber (6) is surrounded by a housing (5) on which the partition wall (7) and the air filter (1) can be mounted.

12. Arrangement according to claim 1, characterised in that the interior space (4) of the air filter (1), and the chamber (6), are each in the form of a flat cylinder.

13. Arrangement according to claim 12, characterised in that the fuel injection valve (8) and the tube (10) are asymmetrically arranged.

14. Arrangement according to claim 1, characterised in that the flow duct (14) contains a flow rectifier (18) in the vicinity of the inlet aperture (17).

15. Arrangement according to claim 1, characterised in that the flow duct (14) contains a protective grid (20) in the vicinity of the outlet aperture (19).

16. Arrangement according to claim 1, characterised in that the flow duct (14) is constructed as a venturi nozzle in whose narrowest cross-section the measuring zone (15) is provided.

17. Arrangement according to claim 1, characterised in that a thermal sensor (15) is arranged at the measuring zone.

18. Arrangement according to claim 17, characterised in that an electrical circuit arrangement (16) associated with the sensor (15) is arranged in the vicinity of the measuring zone (14) on the partition wall (7).

19. Arrangement according to claim 18, characterised in that the electrical circuit arrangement (16) is connected in thermally conductive manner with the partition wall (7).

20. Arrangement according to claim 18, characterised in that further electrical circuit arrangements (22) are arranged on the partition wall (7).

## Revendications

1. Agencement à dispositif de mesure (ou système comportant un débit-mètre) de masses d'air pour moteur à combustion interne, dans lequel le poste de mesure de ce dispositif est disposé dans un tube, agencement caractérisé en ce que le tube de mesure a la configuration d'un canal (14) d'écoulement, sensiblement circulaire, créant un écoulement uniforme au poste de mesure et entoure une cavité (6) qui communique avec un orifice d'aspiration du moteur et qui est adjacente à l'espace intérieur (4) d'un filtre (1) à air; et en ce que cette cavité (6) et cet espace intérieur (4) sont isolés l'un de l'autre par une cloison (7).

2. Agencement selon la revendication 1, caractérisé en ce que la cloison (7) comporte une ouverture, qui forme l'orifice (17) d'entrée du canal (14) d'écoulement et dont la surface est plus grande que la section droite de ce canal (14) d'écoulement.

3. Agencement selon la revendication 2, caractérisé en ce que, à son orifice (17) d'entrée, le canal (14) d'écoulement se trouve dans un plan qui coupe sous un angle aigu la cloison (7).

4. Agencement selon la revendication 1, caractérisé en ce que le canal (14) d'écoulement a une section droite rectangulaire.

5. Agencement selon la revendication 1, caractérisé en ce que le canal (14) d'écoulement a une section droite de forme ronde.

6. Agencement selon la revendication 1, caractérisé en ce que le canal (14) d'écoulement a la conformation voulue pour constituer un boîtier (5, 7) entourant la cavité (6) et formant la cloison (7).

7. Agencement selon la revendication 1, caractérisé en ce qu'un injecteur (8) de carburant, dont le gicleur (9) est vis-à-vis d'un tube (10) allant au moteur et contenant un papillon étrangleur (11), est disposé dans la cavité (6).

8. Agencement selon la revendication 7, caractérisé en ce que le tube (10) pénètre dans la cavité (6) et y est évasé en collerette.

9. Agencement selon la revendication 8, caractérisé en ce que la cloison (7) présente, près de l'injecteur (8), un renflement (23) faisant saillie dans l'intérieur du filtre à air.

10. Agencement selon la revendication 7, caractérisé en ce que des éléments stabilisateurs (13) sont disposés près du gicleur (9).

11. Agencement selon la revendication 1, caractérisé en ce que la cavité (6) est entourée par un boîtier (5), sur lequel la cloison (7) et le filtre à air (1) peuvent être posés.

12. Agencement selon la revendication 1, caractérisé en ce que l'intérieur (4) du filtre (1) à air et la cavité (6) ont chacun la forme d'un cylindre aplati.

13. Agencement selon la revendication 12, caractérisé en ce que l'injecteur (8) de carburant et le tube (10) sont disposés symétriquement.

14. Agencement selon la revendication 1, caractérisé en ce que le canal (14) d'écoulement contient, au voisinage de son orifice (17) d'entrée un régulateur (18) de flux.

15. Agencement selon la revendication 1, caractérisé en ce que le canal (14) d'écoulement comporte, au voisinage de son orifice (19) de sortie, une grille (20) de protection.

16. Agencement selon la revendication 1, caractérisé en ce que le canal (14) d'écoulement a la configuration d'un tube de Venturi, dans la partie la plus étroite duquel le poste (15) de mesure est disposé.

17. Agencement selon la revendication 1, caractérisé en ce qu'un capteur thermique (15) est disposé au poste de mesure.

18. Agencement selon la revendication 17, caractérisé en ce qu'un circuit électrique (16), associé au capteur (15), est disposé sur la cloison (7) à proximité du poste (14) de mesure.

19. Agencement selon la revendication 18, caractérisé en ce que le circuit électrique (16) est en liaison de conduction de chaleur avec la cloison (7).

20. Agencement selon la revendication 18, caractérisé en ce que d'autres circuits électriques (22) sont disposés sur la cloison (7).

FIG.1

FIG.2

# FIG.3